# EUROPEAN PATENT APPLICATION

(11) **EP 2 320 209 A1**
(43) Date of publication of application: **11.05.2011**
(21) Application number: 09811537.1
(22) Date of filing: 03.09.2009
(51) Int. Cl.: G01N 1/28, C12M 1/00, C12M 3/08, C12Q 1/24, G01N 1/36, G01N 33/53

(54) **TISSUE PIECE FORMING DEVICE AND TISSUE PIECE FORMING METHOD**

(30) Priority: 03.09.2008 JP 2008226489
(71) Applicant: National University Corporation University Of Toyama, Toyama-shi, Toyama 930-8555 (JP)
(72) Inventor: FUKUOKA Junya, Toyama-shi Toyama 939-2714 (JP); IIMURA Hajime, Tokyo 142-0061 (JP)
(74) Representative: Seemann, Ralph
(86) International application number: PCT/JP2009/065393
(87) International publication number: WO 2010/027012

(57) **Abstract**

A tissue piece forming device suitable for forming a tissue piece required in the process of fabricating a novel tissue array chip having many benefits such as the one that the tissue array chip can be fabricated even if the tissue included in a tissue block has a small thickness. The tissue piece forming device (100) for forming a sheet-like tissue piece (S) into a roll shape includes a rotary shaft (1) to which one end of the sliced tissue piece (S) is secured and a drive means for rotating the rotary shaft (1). The tissue piece (S) can be formed into a tight roll shape while rotating the rotary shaft (1).

## Description

### Technical Field:

The present invention relates to a tissue piece forming device and a tissue piece forming method each for forming a tissue piece required in the process of producing a tissue array chip having tissue pieces arrayed on a substrate.

### Background Art:

A tissue array chip having tissue pieces arrayed on a substrate is used in examining or analyzing a body tissue. The tissue array chip makes it possible to examine the presence or absence of a diseased tissue, analyze genes or proteins and perform screening through application of a stain solution for specifically staining a test substance to the test substance.

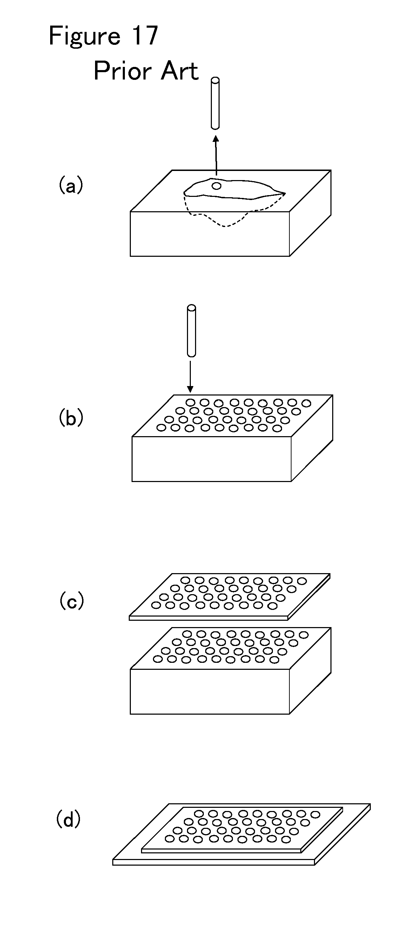

The tissue array chip is fabricated in the following manner. Figure 17 is an explanatory view illustrating a conventional tissue array chip fabrication method. (a) A tissue block having a body tissue formed into a block is punched out to collect cores. (b) The cores thus collected are inserted into holes formed and arrayed in a base block. (c) The base block having the cores inserted into the holes is sliced from its surface on the order of several µm to fabricate a tissue array sheet having the tissue pieces arrayed. (d) The tissue array sheet is mounted on a substrate to fabricate a tissue array chip. Steps (c) and (d) are repeatedly taken to fabricate plural tissue array chips.

The tissue array block used in fabricating the tissue array chips is fabricated with a device equipped with a punching mechanism. Patent document 1 (JP 2004-215667A) discloses a device for forming holes in a base block with a punch for the base block, punching out the tissue block with the punch for the base block to collect cores and inserting the collected cores into the holes in the base block.

### Patent document

Patent Document 1 is JP 2004-215667A

### Disclosure of the Invention:

Problems the Invention intends to solve The prior art mentioned above, however, has entailed the following problems (1) to (7).
(1) There is a case where a tissue block initially has tissues small in thickness. Furthermore, in use, the tissue block is sliced plural times in the process of examination or analysis to make the thickness thereof smaller and smaller. For these reasons, when fabricating tissue array chips, there are cases where cores having sufficient lengths cannot be obtained, where the number of cores that can be fabricated becomes extremely small and where no core can be fabricated.

(2) The tissue block varies its hardness depending on the kind of tissue. For this reason, no core can be punched out even when the punch is inserted in the tissue block or the punch is damaged, depending on the hardness of the tissue. A very skilled technique has been required to stably collect cores using the punch.

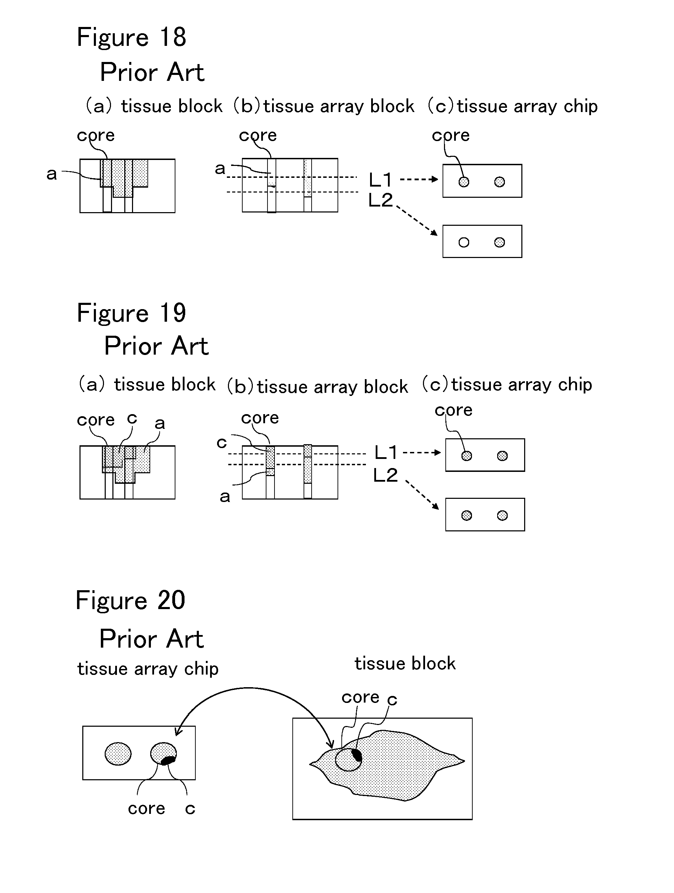

(3) In Figure 18, (a) is a schematic cross section of a tissue block illustrating cores collected when the tissue block (tissue block devised to examine expressed protein using immunostaining) that is paraffin-embedded (generally, dewatered with ethanol and treated with xylene and then with paraffin), (b) a schematic cross section of a tissue array block having cores embedded therein, and (c) a schematic plan view of a tissue array chip fabricated from the tissue array block. As shown in (a), since the tissue block is amorphous, the cores collected from plural tissue blocks and from different places of a single tissue block have included therein tissue portions an uneven in length. For this reason, when the tissue array block has been sliced to fabricate tissue array chips, as shown in (b) and (c), for example, the tissue portions a of all the cores emerge in the neighborhood L1 of the surface layer while there are cores having tissue portions a failing to emerge at a deep portion L2. Thus, there is a case where no tissue piece exists depending on the position of the tissue array block to be sliced.

(4) When fabricating a tissue array chip, with an interested section c, such as that of a diseased tissue, as a target, the interested section c of the tissue block is specified to selectively collect cores. In Figure 19, (a) is a schematic cross section of a tissue block illustrating cores collected, with the interested section c as a target, (b) a schematic cross section of a tissue array block having the cores embedded therein, and (c) a schematic plan view of a tissue array chip fabricated from the tissue array block. As shown in (a), since the interested section c included in the tissue block is amorphous, similarly to the above case, there is a case where no interested section c exists depending on the position of the tissue array block to be sliced.

(5) In examining the presence or absence of a diseased
tissue, it is desirable to collect cores from further different regions from the standpoints of reliability and analysis accuracy. In the method using the punch, however, since cores to be collected exist locally in the tissue block, the reliability and analysis accuracy have their own limits.

(6) When the interested section c is included in one of the cores on the tissue array chip and the tissue block, there is demand for the fact that a corresponding portion of the other of the two is to be specified. Figure 20 is an explanatory view illustrating the correspondence relation between the interested section c included in the core on the tissue array chip and the interested section c of the tissue block. Since the cores are generally circular in cross section and since the directions of the cores after being collected from the tissue block cannot be specified, it is made difficult to allow the position of the interested section c in the core to correspond to the position of the interested section c in the tissue block.

(7) A tissue block from which cores are collected is used for various examinations or analyses. However, when interested sections of the tissue block are collected through punching, all the interested sections are taken off the tissue block to induce a case where subsequent examinations or analyses cannot be performed.

In view of the above, the object of the present invention is to provide a tissue piece forming device and a tissue piece forming method each capable of solving all the problems (1) to (7) of the aforementioned prior art and suitable for forming a tissue piece required in the process of fabricating a novel tissue array chip.

### Summary of the Invention:

At first, the technical idea constituting the condition of the present invention will be described in order to cause the present invention to be understood with ease. Upon repeating keen studies, the inventors have developed a novel tissue array chip capable of solving the prior art problems described above. Incidentally, the applicant of the present application applied for a patent in respect of the technique in Japanese Patent application No. 2007-56884 and PCT/JP2008/053965.

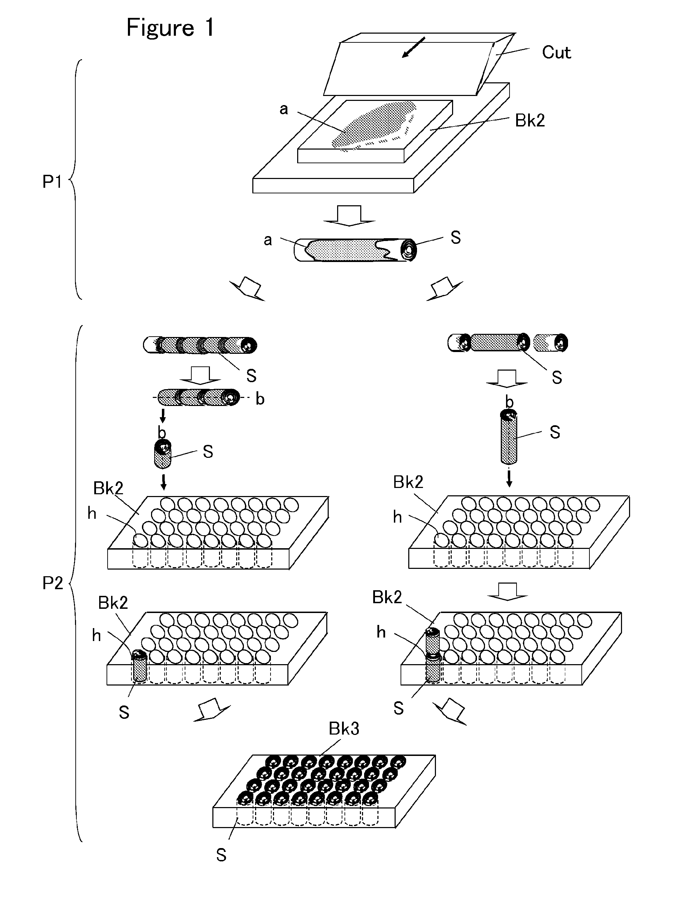

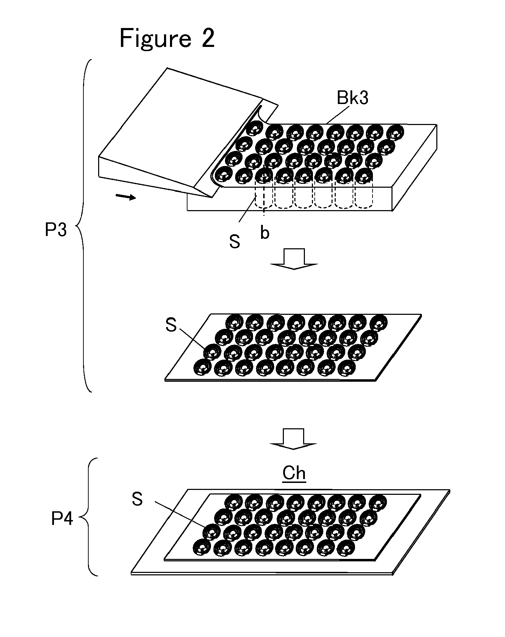

Figures 1 and 2 are explanatory views illustrating the fabrication method of the tissue array chip Ch the inventors have developed. Process P1: A tissue block Bk1 is sliced with a cutter to obtain a roll-shaped tissue piece S having a sheet-like tissue piece S rolled up. Incidentally, here, a tissue embedded in paraffin resin is used as the tissue block Bk1, in which a tissue portion "a" has a paraffin resin portion around it. Process P2: The paraffin resin portion is cut off the roll-shaped tissue piece S to cause the tissue portion a to remain and the tissue portion left unchanged or cut to have a prescribed length is inserted into a hole h of a base block Bk2 made of a paraffin resin in the direction of an axis b. The holes h are arrayed in the base block Bk2. The tissue piece S inserted is fixed to the base block Bk2. In the state in which the tissue piece S has been inserted into the hole h, for example, the base block Bk2 is heated to melt paraffin, or molten paraffin is filled in the hole h and the paraffin is then solidified. As a result, a tissue array block Bk3 having roll-shaped tissue pieces S arrayed is fabricated. Process P3: The tissue array block Bk3 is sliced in such a direction that the tissue piece has a spiral shape in cross section to fabricate a tissue array sheet having the spiral tissue pieces S arrayed. Process 4: By mounting the tissue array sheet on a substrate, such as a prepared slide, a tissue array chip Ch is fabricated.

According to the above, even when the thickness of the tissue portion a is small, it is possible to fabricate a corresponding number of tissue array chips Ch insofar as the width of the tissue portion a is sufficient size. Since the surface of the tissue block Bk1 is sliced to fabricate a tissue piece S, this fabrication is little affected by the hardness of the tissue as compared with the fabrication with a punch requiring power concentration to a single point. No one skilled in the art is necessitated in comparison with the punching operation requiring subtle power adjustment depending on the hardness of the tissue. In addition, since the sheet-like tissue formed into a roll shape is embedded, the number of tissue array chips to be fabricated relative to the number of tissues collected from the tissue block is increased as compared with the conventional punching operation. Since the surface is merely sliced thinly, the tissue block from which the tissue pieces have been collected enables interested sections to remain and the interested section can be selected again in the subsequent examination or analysis.

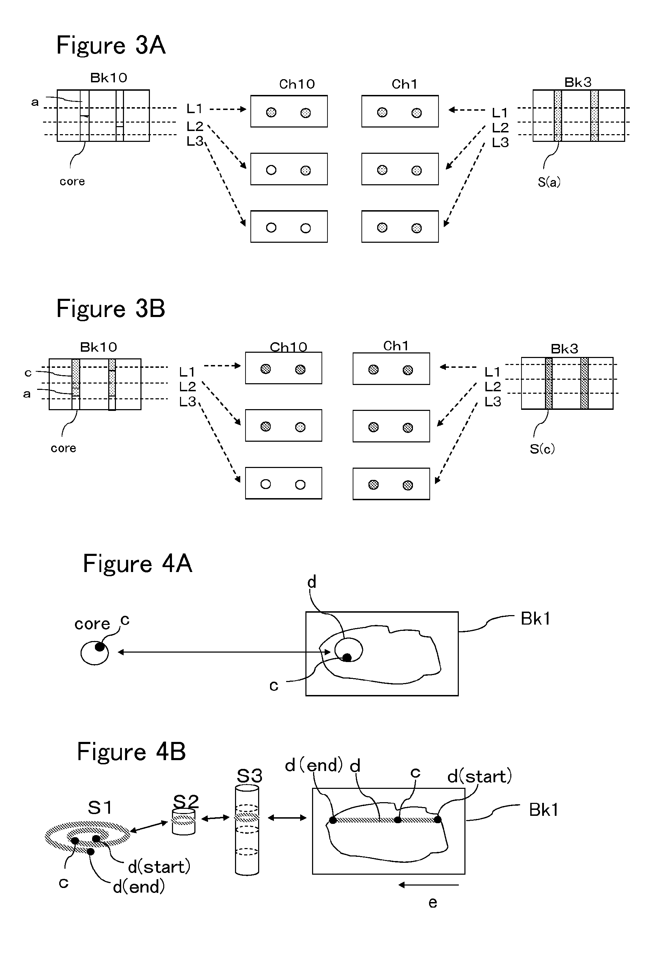

Figures 3A, 3B, 4A and 4B are explanatory views illustrating the effect of the developed tissue array chip. Figure 3A is an explanatory view comparing a state in which a tissue array chip Ch10 has been fabricated from a tissue array block Bk10 using a conventional punching process and a state in which a tissue array chip Ch1 has been fabricated from a tissue array block Bk3 according to the present method, and Figure 3B is an explanatory view comparing the states in which tissue array chips Ch1 and Ch10 having interested sections c have been fabricated from tissue array blocks Bk3 and Bk10. In the conventional tissue array block Bk10, since the lengths of the tissue portions a or interested sections c included in cores are uneven, the tissue portion or interested section fails to exist in the tissue array chip Ch10 depending on positions L1 to L3 at which the tissue array block is sliced. In the tissue array block Bk3 of the present invention, since the lengths of the tissue portions a or interested sections c are even over the roll-shaped tissue piece S, there is no case where the tissue portion a or interested section c fails to exist even when the tissue array block is sliced at any of the positions L1 to L3.

Figure 4A is a diagram illustrating the corresponding relation between a core on the tissue array chip Ch10 according to the conventional punching process and a region d of the tissue block Bk1 in which tissue pieces are collected, and Figure 4B is a view showing the corresponding relation between the spiral tissue piece S1 on the developed tissue array chip Ch1 and the collection region d of the tissue block Bk1. In the case of the conventional punching process, cores are collected from a very biased region d. On the other hand, since the spiral tissue pieces S1 are collected from different regions d intersecting with the tissue block Bk1, it is possible to heighten the reliability of a pathological examination, such as the presence or absence of cancerous tissue, as compared with the conventional technique performing the process of punching at a single point.

In addition, according to the conventional punching process, as shown in Figure 4A, since cores generally have a circular shape, the direction thereof after being collected becomes unclear to make the corresponding relation between the position of the interested section c in the core and the position of the interested section c within the collection region d of the tissue block Bk1 unclear. On the other hand, as shown in Figure 4B, in the case of the tissue array chip Ch in the present method, it is possible to grasp positional corresponding relation among a spiral tissue piece S1, a roll-shaped tissue piece S2 after being cut, a roll-shaped tissue piece S3 before being cut and the tissue block Bk1. In the figure, arrow e denotes a rolling-up direction in the roll-forming process, an inside end d (start) of the tissue piece S is on a rolling-up start side, and an outer end d (end) is on a rolling-up end side. On the basis of the corresponding relations, it is possible to determine the positional relation between the interested section c in the spiral tissue piece S1 and the interested section c within the tissue block Bk1.

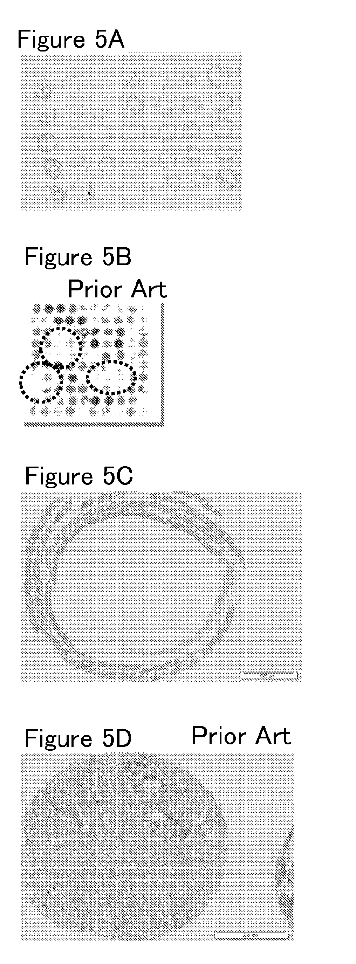

In addition, the inventors have actually fabricated a tissue array chip they have developed. According to the invention, Figure 5A is a view drawn from a photograph of the developed tissue array chip. Figure 5B is a view drawn from a photograph of a conventional tissue array chip obtained by punching as prior art. Though the conventional tissue array chip has to have circular tissue pieces arrayed, as shown by dashed lines in the figure, there are portions having no tissue piece. On the other hand, according to the present tissue array chip, it is possible to obtain the tissue array chip having plural tissue pieces arrayed with no such portion.

According to the invention, Figure 5C is a view drawn from an enlarged photograph of a tissue piece of the tissue array chip obtained by the tissue piece forming method. Figure 5D is a view drawn from an enlarged photograph of a tissue piece of the conventional tissue array chip obtained by punching as prior art. The conventional tissue pieces collected are biased toward a single point. On the other hand, the tissue pieces of the present embodiment have a spiral shape and are widely collected from different regions.

According to the present invention, The tissue piece forming device and tissue piece forming methods of the present invention have been established based on the above technical ideas. In a process P1 for slicing a tissue block to fabricate a sheet-like tissue piece S, the portion sliced has a feature of being gradually curved, with the surface thereof directed upward, and naturally rolled up. In view of this, in the process P2, the tissue piece toll-shaped owing to the above feature can be utilized without any modification. However, the inventors have obtained knowledge, in the course of their development and from the standpoint of heightening the integration degree of a tissue, that the sheet-like tissue piece S is preferably densely rolled up after the slicing operation and that the rolled-up state is preferably further highly dense.

In addition, in the developed method, a tissue block Bk1 is sliced thickly (50 to 200 µm, for example) in many cases from a viewpoint of observability of a tissue array chip Ch obtained. However, when the tissue block Bk1 has been sliced in a certain degree of thickness, the sheet-like tissue piece S being sliced has cracks in many cases. In addition, as described above, since the sheet-like tissue piece has a feature of being naturally rolled up gradually, handling is disadvantageous for densely re-rolling up the tissue piece in that state.

In view of the above, the inventors have, as a result of further repeated studies, completed a tissue piece forming device of the present invention capable of forming a sheet-like tissue piece into a roll shape in a densely rolled-up state, preventing cracks from being formed at a slicing operation and simultaneously bringing the tissue piece to an advantageously rolled-up state.

The present invention provides a tissue piece forming device for forming a sheet-like tissue piece into a roll shape, comprising a rotary shaft capable of fixing one end of the sheet-like tissue piece thereto and drive means for rotating the rotary shaft, whereby the sheet-like tissue piece is formed into a roll shape while the rotary shaft is rotated. The present invention further provides a tissue piece forming method for forming a sheet-like tissue piece into a roll shape, comprising forming the tissue piece into a roll shape while rotating a rotary shaft capable of fixing one end of the tissue piece thereto. Here, the sheet-like piece may have a plain shape or a curved shape (roll shape) formed through slicing of a tissue block. When the tissue block has been sliced, the tissue piece is generally urged to form a roll shape. However, the roll-shaped tissue piece may be extended into a sheet shape and fixed to the rotary shaft or a slightly roll-shaped tissue piece may be fixed to the rotary shaft. According to these inventions, by fixing one end of the sheet-like tissue piece to the rotary shaft and rotating the rotary shaft, the tissue piece is rolled up on the rotary shape to form the tissue piece into a roll shape in a densely rolled-up state. The present invention further provides a tissue piece forming method for forming a sheet-like tissue piece into a roll shape, comprising forming the tissue piece into a roll shape while rotating a rotary shaft made of synthetic resin or rubber and capable of fixing one end of the tissue piece thereto and cutting the tissue piece formed into the roll shape together with the synthetic resin or rubber rotary shaft. According to this invention, the tissue piece rolled-up in the densely rolled-up state on the synthetic resin or rubber rotary shaft serving as a core is cut off without any modification.

In the present invention, the fixing means for fixing one end of the sheet-like tissue piece to the rotary shaft is used and preferably comprises the groove portion formed in the axial direction and the insert member capable of being inserted and extracted from the groove portion. According to the present invention, since the one end of the sheet-like tissue piece is fixed to the insert member, the roll-shaped tissue piece rolled up can be extracted from the rotary shaft together with the insert member.

Furthermore, the tissue piece forming device of the present invention is equipped preferably with the mounting board disposed at the position in the vicinity of the rotary shaft for mounting the sheet-like tissue piece thereon and the tissue piece-heating means for heating the tissue piece mounted on the mounting board. According to the present invention, by mounting the sheet-like tissue piece on the mounting board and heating the tissue piece with the heating means, the tissue piece is brought to a soft state and rolled up on the rotary shaft in the advantageous state maintained.

In addition, it is preferred to provide the mounting board disposed at the position in the vicinity of the rotary shaft for mounting the tissue piece thereon and the tissue piece-cooling means for cooling the sheet-like tissue piece mounted on the mounting board. According to the present invention, by mounting the sheet-like tissue piece on the mounting board and cooling the tissue piece with the cooling means, the tissue piece formed in the shape of a dense roll can be solidified.

In addition, the tissue piece forming device of the present invention is preferably equipped with the press means for pressing the tissue piece fixed to the rotary shaft toward the rotary shaft. According to the present invention, since the sheet-like tissue piece is rolled up on the rotary shaft while being pressed with the press means toward the rotary shaft which is to prevent a gap occurs from being formed in the rolling-up operation and enable the rolled-up state to be further highly dense.

### Effects of the Invention:

According to the present invention, since the sheet-like tissue piece is rolled up, with one end thereof fixed to the rotary shaft, the sheet-like tissue piece can be formed into a roll shape in a densely rolled-up state. By inserting the roll-shaped tissue piece thus formed in the hole of the base block in the axial direction and slicing the base block in the direction intersecting the axis of the roll-shaped tissue piece, the tissue piece has a spiral shape in the densely rolled-up state, thereby enabling a highly integrated tissue array chip solving all the prior art problems to be fabricated.

In addition, when the sheet-like tissue piece fixed to the insert member is rolled up, the tissue piece formed into a dense roll shape can easily be extracted from the rotary shaft. Furthermore, by heating the sheet-like tissue piece mounted on the mounting board with the tissue piece-heating means, the tissue piece is increased in flexibility and brought to a state advantageous for being rolled up while being prevented from inducing cracks. In addition, when the tissue piece fixed to the rotary shaft with the fixing means has been pressed with the press means toward the rotary shaft, it is possible to prevent a gap from being formed in the rolling-up operation and enable the rolled-up state to be further highly dense.

On the other hand, since the tissue piece forming method uses the rotary shaft having a hollow interior and made of synthetic resin or rubber, it becomes possible to cut with the cutting tool the formed roll-shaped tissue piece together with the portion of the rotary shaft made of synthetic resin or rubber on the outer circumference of the metal support bar in the forming process. In addition, since the adhesiveness of the paraffin-embedded tissue piece relative to synthetic resin is stronger than relative to metal, it is possible to easily form the tissue piece into a dense roll shape, combined with the flexibility of the synthetic resin, even in the case not using paraffin in a molten state. In addition, by cutting the roll-shaped tissue piece together with the rotary shaft made of synthetic resin, it is possible to easily form plural cut roll-shaped tissue pieces (spiral tissue pieces) and, at the same time, easily remove the core member made of synthetic resin because no paraffin in a molten state is used.

### Brief Description of the Drawings:

Figure 1 is an explanatory view illustrating a fabrication method of a tissue array chip that constitutes the condition of the present invention.

Figure 2 is an explanatory view illustrating the fabrication method of the tissue array chip that constitutes the condition of the present invention.

Figure 3A and 3B are an explanatory view illustrating the effects of the tissue array chip that constitutes the condition of the present invention.

Figure 4A and 4B are an explanatory view illustrating the effects of the tissue array chip that constitutes the condition of the present invention.

Figure 5A is a view drawn from a photograph of the developed tissue array chip obtained by the present invention.

Figure 5B is a view drawn from a photograph of a conventional tissue array chip obtained by punching method as prior art.

Figure 5C is a view drawn from an enlarged photograph of a tissue piece of the tissue array chip obtained by the present invention.

Figure 5D is a view drawn from an enlarged photograph of a tissue piece of the conventional tissue array chip obtained by punching method as prior art.

Figure 6 is a schematic perspective view of a tissue piece forming device according to the first embodiment of the present invention.

Figure 7 is an enlarged perspective view showing a formed portion in the first embodiment.

Figure 8 is an enlarged perspective view showing fixing means in the first embodiment.

Figure 9A and 9B are an explanatory view illustrating a tissue piece-fixing method using the fixing means in the first embodiment.

Figure 10A and 10B are an explanatory view illustrating press means in the first embodiment.

Figure 11A and 11B are an explanatory view illustrating the state of use (positioning the tissue piece) by the tissue piece forming device in the first embodiment.

Figure 12A, 12B and 12C are an explanatory view illustrating the state of use (rolling up) by the tissue piece forming device in the first embodiment.

Figure 13 is a perspective view showing an example of a roll-shaped tissue piece obtained by the tissue piece forming device in the first embodiment.

Figure 14A, 14B and 14C are an explanatory view showing another state of use (rolling up) by the tissue piece forming device in the first embodiment.

Figure 15 is an explanatory view showing another example of the roll-shaped tissue piece obtained by the tissue piece forming device in the first embodiment.

Figure 16 is a schematic perspective view of a tissue piece forming device according to the second embodiment of the present invention.

Figure 17 is an explanatory view illustrating a conventional tissue array chip fabrication method as prior art.

Figure 18 is an explanatory view illustrating a conventional tissue block, tissue array block and tissue array chip, as prior art.

Figure 19 is an explanatory view illustrating the conventional tissue block, tissue array block and tissue array chip, with the interested sections as targets, as prior art.

Figure 20 is an explanatory view illustrating the conventional correspondence relation between the interested section included in the core and the interested section of the tissue block, as prior art.

Figure 21 is a perspective view of a tissue piece forming device according to the third embodiment of the present invention.

Figure 22 is a perspective view illustrating a tissue piece forming method according to the third embodiment.

Figure 23A and 23B are a perspective view illustrating a tissue piece forming method according to the fourth embodiment of the present invention.

### Detailed description of the Invention:

Next, the description will be made concerning concrete embodiments according to the present invention by referring to the drawings.

### First embodiment

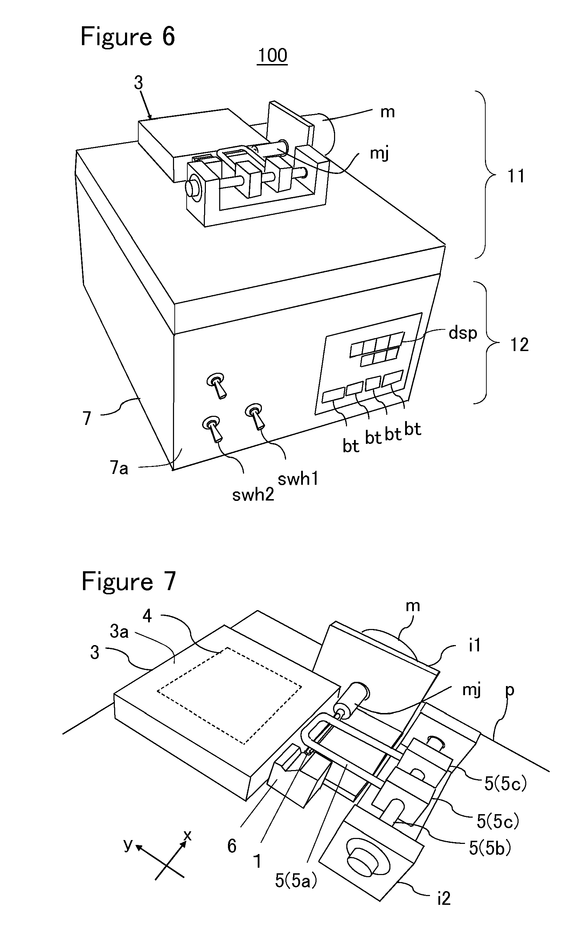

According to the invention, Figure 6 is a schematic perspective view of a tissue piece forming device 100. The tissue piece forming device 100 comprises a forming portion 11 and a control portion 12 disposed under the forming portion 11. The forming portion 11 has a function to form a sheet-like tissue piece S in the shape of a roll, and a control portion 12 has a function to control the forming portion 11. Incidentally, the sheet-like tissue piece S will be described, with one sliced from a tissue block Bk1 (refer to Figure 1) that is paraffin-embedded (dewatered with ethanol and treated with xylene and then with paraffin) as an example.

At first, the forming portion 11 will be described. Figure 7 is an enlarged perspective view illustrating the forming portion 11. The forming portion 11 is equipped on a substrate p thereof with a rotary shaft 1, fixing means 2, a mounting board 3, tissue piece-heating means 4 and press means 5.

The rotary shaft 1 rotates around its axis to have a function to roll up the sheet-like tissue piece S on its outer circumference. A motor *m* constituting drive means is disposed on one side of the rotary shaft 1. The motor *m* projects in a predetermined height from the substrate *p* via a plate-like disposing member i1, and the rotary shaft 1 has its one end connected to a drive shaft mj of the motor *m* via a hole formed in the disposing member i1 (Figures 6 and 7). In addition, the plate-like disposing member i1 is adapted to be rotatable backward and forward on the substrate *p* in the direction of *x* in the figure. With this, the rotary shaft 1 can be rotated at a position of predetermined height on the substrate p. The outer circumferential surface of the rotary shaft 1 is subjected to processing for giving a low friction coefficient thereto, e.g. fluorine resin processing. Incidentally, the rotary shaft 1 is made of a cylindrical metal about 1.5 mm in diameter and about 50 mm in length. However, this is not limitative.

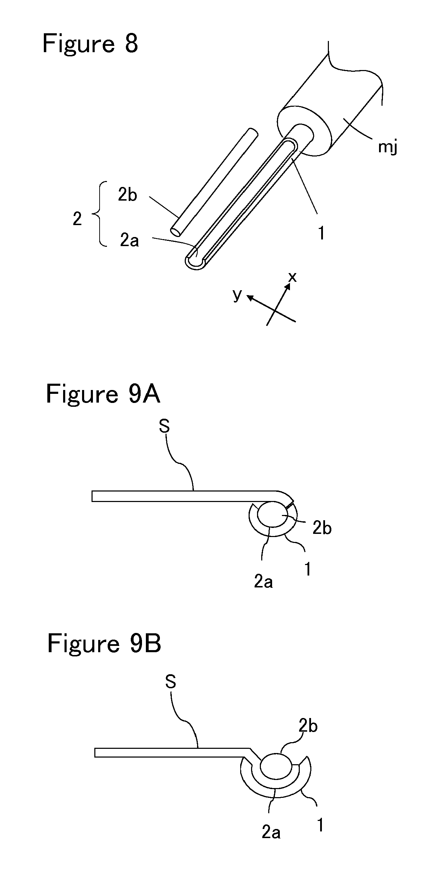

The rotary shaft 1 can fix one end of the sheet-like tissue piece S thereto. In the present embodiment, the fixing means 2 is used for this purpose. In the third embodiment, however, the sheet-like tissue piece can be formed in the shape of a roll without use of the fixing means 2. Figure 8 is an enlarged perspective view of the fixing means 2. The fixing means 2 comprises a groove portion 2a formed in the rotary shaft 1 and an insert member 2b.

The groove portion 2a is formed in the shape of a letter *U* in cross section by the step of partially notching the pipe-like rotary shaft in an axial direction *x*. Incidentally, the length of the groove portion 2a in the axial direction *x* of the rotary shaft 1 is about 35 mm, and a maximum width in a radial direction *y* (inner circumferential diameter of the rotary shaft 1) is about 1 mm. However, this is not limitative. In addition, preferably, the width of the opening is the same as or narrower than the maximum width in the radial direction *y* (inner circumferential diameter of the rotary shaft 1).

The insert member 2b is like a stick and is inserted into the groove portion 2a to enable one end of the tissue piece S to be fixed to the rotary shaft 1. While a stick made of a metal may be used as the insert member 2b, a stick made of a thermoplastic resin is preferably used and, more preferably, the same material as a sampling material used for the tissue piece S (paraffin resin in the present embodiment) is used from the standpoint of their mutual adhesiveness.

Two fixing methods using the insert member 2b can be cited as follows. Figure 9A is an explanatory view illustrating the first fixing method. It comprises disposing the sheet-like tissue piece S on the insert member 2b in a state in which the insert member 2b has been inserted in the groove portion 2a and fixing the tissue piece S and the insert member 2b together by adhesion. In this case, the insert member 2b has a diameter so as not to drop off the groove portion 2a and is inserted from the distal end of the rotary shaft 1 in the axial direction *x* into the groove portion 2a. In performing fixing by adhesion, the tissue piece S or insert member 2b is heated appropriately to melt slightly and deprived of heat to attain solidification and adhesion. In the heating step, the tissue piece S is disposed on the insert member 2b may heated using heating means prepared separately, such as a heater, or the tissue piece S may be appropriately heated to melt using the tissue piece-heating means 4 to be described later, or the rotary shaft 1 provided with heating means may be heated appropriately to heat the tissue piece S or insert member 2b.

Figure 9B is an explanatory view illustrating the second fixing method. One end of the sheet-like tissue piece S is disposed between the insert member and the groove portion 2a. The insert member is inserted together with the one end into the groove portion 2a and used. As a result, the one end of the tissue piece S is packed in the groove portion 2a without leaving any gap and fixed. The insert member 2b has a length substantially the same as the width of the tissue piece S and a diameter so as not to drop off the groove portion 2a. Several kinds of insert members having different lengths and diameters may be prepared so that any one having a length and a diameter corresponding to the thickness and size of the tissue piece S may be appropriately selected.

The mounting board 3 is disposed near the vicinity of the rotary shaft 1 for mounting the sheet-like tissue piece S thereon and enables the rotary shaft 1 to position the one end of the tissue piece S in a state in which the sheet-like tissue piece S has been mounted on a mounting surface 3a.

The tissue piece-heating means 4 has a function to heat the sheet-like tissue piece S to soften the same. It is a heater embedded in the mounting board 3 in the present embodiment, and a device for converting electric energy into heat, such as a hot plate or a Peltier device, can be used as the heater. The mounting surface 3a of the mounting board is made of a metal having high heat conductivity and, when the tissue piece S has been mounted on the mounting board 3, heat of the tissue piece-heating means 4 is conducted to the mounting surface 3a to enable the tissue piece S to be heated. Incidentally, the tissue piece-heating means 4 is preferably equipped with a temperature sensor to enable the temperature to be adjusted in accordance with the instructions from the control portion 12.

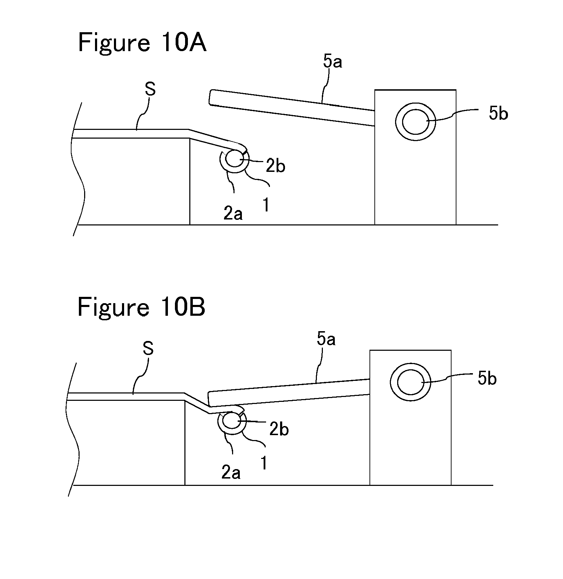

The press means 5 has a function to press in the direction toward the rotary shaft the tissue piece S rolled up on the rotary shaft 1. It has, in the present embodiment, an abutting portion 5a and a support shaft 5b to which the abutting portion 5a is connected. The abutting portion 5a is a substantially U-shaped metallic bar having a width in the axial direction *x* of the rotary shaft 1, has both ends connected to the support shaft 5b via attaching members 5c and 5c, and is disposed in the direction intersecting with the axial direction of the rotary shaft 1. The support shaft 5b is pivotally supported on a mounting member i2 in a prescribed height from the substrate *p* and, as a result, the abutting portion 5a can be swung around the support shaft 5b. When the abutting portion 5a is caused to descend, as shown in Figures 10A and 10B, the distal end of the abutting portion 5a enters the pathway of the sheet-like tissue piece S and abuts on the tissue piece S and by its own weight presses the tissue piece S in the direction approaching the rotary shaft 1 (in the downward direction in the figures). Incidentally, a support base 6 disposed on the side of the distal end side of the rotary shaft 1 is adapted to support the distal end of the rotary shaft when the rotary shaft 1 has received a large downward burden, thereby preventing the large deformation and underage of the rotary shaft 1. The support base 6 has its upper surface V-notched to locate the distal end of the rotary shaft 1 in the notch.

The control portion 12 will next be described. The control portion 12 is a portion for controlling the rotary shaft 1 or tissue piece-heating means 4. A housing 7 is equipped with an input portion 7a that has switches, a display portion, etc. disposed thereon. A switch swh1 is adapted to perform the rotation ON/OFF operation of the rotary shaft 1. A switch swh2 is adapted to perform the ON/OFF operation of the tissue piece-heating means 4. Setting buttons bt, .., bt are buttons for setting the temperature of the tissue piece-heating means 4, and the set temperature is displayed on a display portion dsp. Embedded in the housing 7 are various control means (not shown) that perform predetermined controls in accordance with input signals input from the input portion 7a.

The tissue piece forming device 100 is used in the following manner. The tissue piece S to be used is a sheet-like or loosely coiled (rolled) tissue piece S sliced from the tissue block Bk1 having a tissue embedded in a paraffin resin. Though the thickness of the tissue piece S is not particularly limited, it is not more than 200 µm (exclusive of 0 µm), preferably 30 µm to 200 µm, more preferably 50 µm to 100 µm.

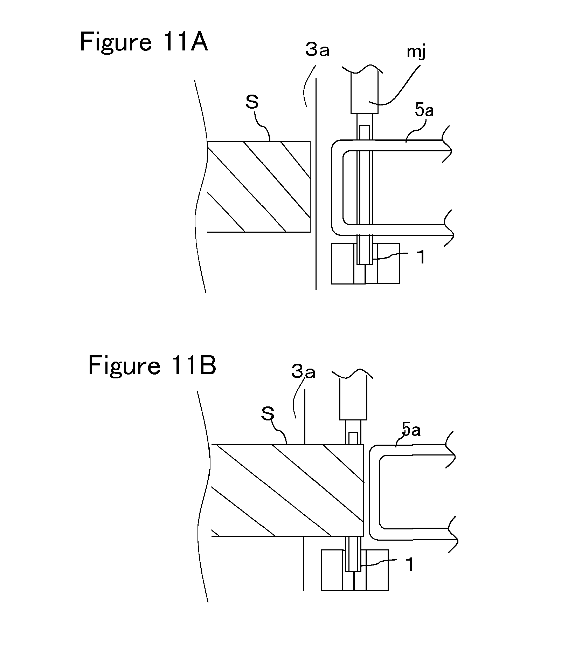

At first, the switch swh2 is turned on to heat the mounting surface 3a of the mounting board 3 with the tissue piece-heating means 4. In this state, the sheet-like tissue piece S is mounted on the mounting surface as shown in Figure 11A. As a result, the sheet-like tissue piece S mounted on the mounting surface 3a is heated and softened. Here, when the tissue piece S is brought into a loosely rolled state due to its own characteristics, it is preferably extended and formed into a plain shape. Next, as shown in Figure 11B, the abutting portion 5a of the press means 5 is caused to ascend to bring the tissue piece into non-contact with it, and the one end side of the tissue piece S is disposed in and fixed to the rotary shaft 1. The fixing method used here is the first or second fixing method.

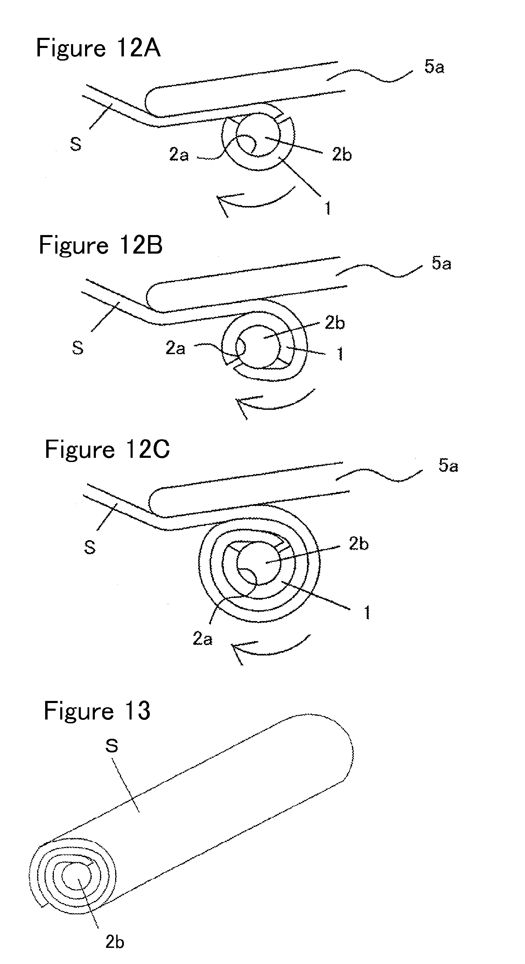

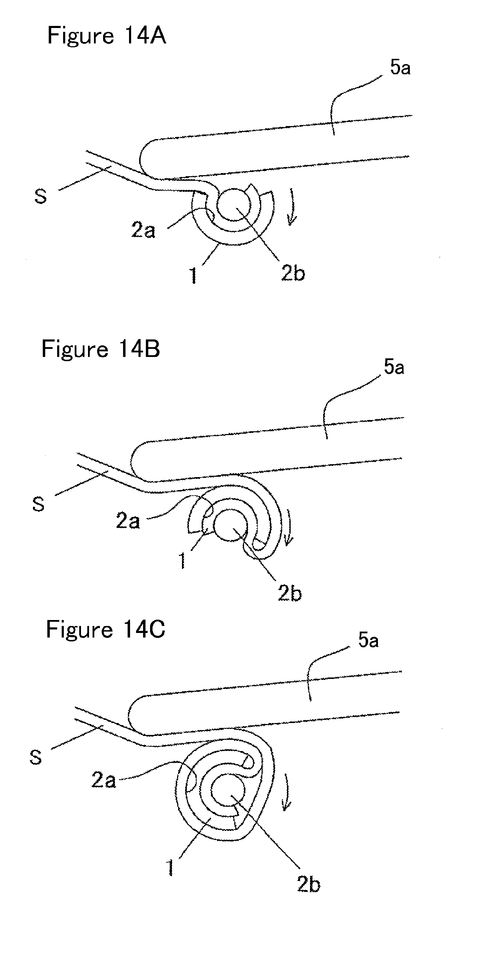

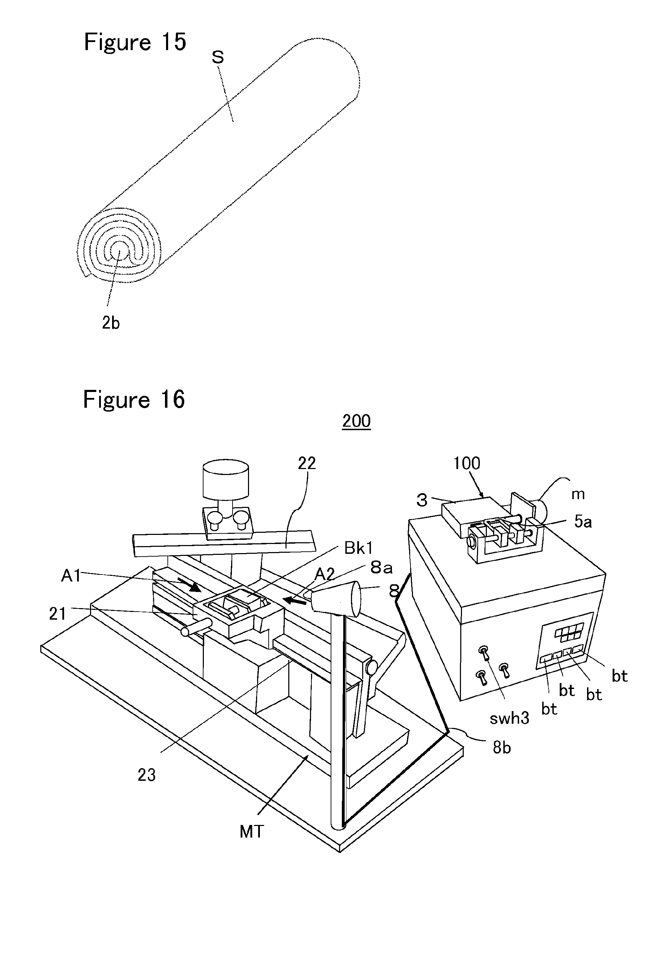

Thereafter, as shown in Figure 10A to 10B, the abutting portion 5a of the press means 5 is caused to descend to bring the abutting portion into contact with the tissue piece S. Consequently, the tissue sheet S is pressed in the direction approaching the rotary shaft 1. Next, the switch swh1 is turned on to rotate the rotary shaft 1. Figure 12A, 12B and 12C are an explanatory view illustrating the rotation in a state fixed by the first fixing method, and Figure 13 is a perspective view of a roll-shaped tissue piece S obtained thereby. Figure 14A, 14B and 14C are an explanatory view illustrating the rotating in a state fixed by the second fixing method, and Figure 15 is a perspective view of the roll-shaped tissue piece S obtained thereby. Though the rotating direction is optional, when the fixing has been performed using the first fixing method, the rotation is preferred in the rightward direction in Figure 12. As shown in Figures 12A, 12B, 12C, 14A, 14B and 14C, the rotary shaft 1 rolls up the sheet-like tissue piece S, with the insert member 2b as a core while being rotated. Thus, the sheet-like tissue piece S is rolled up on the outer circumference of the rotary shaft 1 into a densely rolled-up roll.

In the present embodiment, the tissue piece S is heated beforehand with the tissue piece-heating means 4 and brought to a state in which it is softened advantageously for being rolled up. Therefore, the tissue piece S is readily deformed along the rotary shaft 1 to enable the densely rolled-up state to be further established. In addition, it becomes easy to handle the tissue piece when fixing it to the rotary shaft 1. Furthermore, in the course of rolling up the tissue piece, the press means 5 is brought to a state in which the distal end thereof enters the pathway of the tissue piece S, comes into contact with the tissue piece S and, owing to its own weight, presses the tissue piece S in the direction toward the rotary shaft 1. Therefore, a gap is hard to form during the rolling-up process to make the rolled-up state further dense.

When the rolling-up process has been completed, the abutting portion 5a of the press means 5 is caused to ascend to bring the press means into non-contact with the tissue piece, the tissue piece S is slid in the axial direction *x* of the rotary shaft 1 while the rotary shaft 1 is lifted slightly from the support base 6, and the tissue piece is extracted together with the insert member 2b. At this time, since the insert member 2b serves as a core, the tissue piece S is easy to extract and there is no possibility of the roll-shaped tissue piece keeping its shape better. As a result, the roll-shaped tissue piece S as shown in Figures 13 and 15 can be obtained. With the tissue piece forming device 100, it is possible to form the sheet-like tissue piece in the shape of a roll in a highly dense rolled-up state. Particularly, when the tissue piece S fixed by adhesion to the insert member 2b has been rolled up, that is to prevent a gap occurs at the center of the tissue piece S, as shown in Figure 12A to 12C. This is advantageous. Though the insert member 2b is extracted as occasion demands, when it is made of a thermoplastic resin, particularly material used for sampling (paraffin resin in the present embodiment), it is preferably integrated with the tissue piece by means of melting and solidification without being extracted. As a result, it is possible to prevent the tissue piece from being hollowed at the center thereof. Furthermore, when the insert member 2b is made of a synthetic resin, such as *Teflon* (registered trademark) or vinyl chloride, that can be cut off simultaneously with the cutting-off process of the tissue piece, or of a material easy to escape from a prepared slide, the insert member may be left as it is without being extracted.

The roll-shaped tissue piece S is used for producing a tissue array chip Ch. In a process P2 (refer to Figure 1), the roll-shaped tissue piece S is inserted into a hole h in a base block Bk2 to fabricate a tissue array block Bk3. At this time, when the insert member 2b is made of a thermoplastic substance (particularly, paraffin), the base block Bk2 is heated to melt the insert member 2b, thereby enabling the insert member to be integrated with the tissue piece S inserted into the hole h without forming any gap in the base block Bk2. By slicing the tissue array block Bk3, the tissue array chip having the spiral tissue piece S disposed therein is fabricated. The tissue array chip can solve all the conventional problems and, since the spiral tissue piece S is highly dense, the integration degree is high, and the reliability or analysis accuracy in examining pathology, such as the presence or absence of a cancerous tissue, is highly enhanced.

### Second embodiment

According to the invention, Figure 16 is an explanatory view illustrating a tissue piece forming device 200. The tissue piece forming device 200 in the present embodiment is equipped with tissue block-heating means 8 in addition to the tissue piece forming device 100. Incidentally, the elements of the present embodiment that are the same as those in the previous embodiment are given the same reference numerals or symbols, and the description thereof will be omitted.

First, the step of producing a sheet-like tissue piece S, which is the condition of the present embodiment, will be described. The sheet-like tissue piece S is fabricated in the process of slicing a tissue block Bk1 that is the preceding process of forming a roll as described earlier (refer to a process P1 in Figure 1). The tissue block Bk1 is sliced with a tissue block-slicing device MT. The tissue block-slicing device MT is a microtome, for example, and is equipped with a tissue block holder 21 for fixing the tissue block Bk1 and a cutter blade 22 for slicing the tissue block Bk1, in which the tissue block holder 21 is slid along a guide rail 23 in a traveling direction (direction toward the cutter blade 22) to move the tissue block holder 21 and the cutter blade 22 relative to each other, thereby slicing the tissue block Bk1 with the cutter blade 22.

When the tissue block Bk1 has been sliced, as described above, the portion of the tissue block sliced is liable to crack. In many cases, sliced pieces have a thickness (50 to 200 µm) larger than ordinary sliced pieces (3 to 5 µm) and, in these cases, there is a tendency to induce multiple cracks. In addition, the sliced portion has a feature of being gradually curved, with the surface thereof directed upward, and rolled up (into a roll). In a state in which the sliced portion has been rolled up in advance, handling becomes difficult in densely rolling up the sliced portion, with the sliced portion fixed to a rotary shaft 1. Therefore, tissue block-heating means 8 is used in the slicing step.

The tissue block-heating means 8 can be disposed in the vicinity of the tissue block-slicing device MT and has a function to heat the tissue block Bk1. Though the heating method may be that using infrared irradiation insofar as the surface of the tissue block Bk1 sliced can be heated, warm air heating is used in the present embodiment. To be specific, the tissue block-heating means 8 is equipped with a heat source, such as an electrically heated wire, and a fan (not shown in Figures) and can blow warm air from a fan mouth. The tissue block-heating means 8 is connected to a control portion 12 via a line 8b and, with a switch swh3 or setting buttons bt, .., bt on the control portion 12, it is possible to control the ON/OFF operation of a power source or temperature and the air volume. Furthermore, the tissue block holder 21 is preferably equipped with a temperature sensor to control the surface of the tissue block Bk1 sliced to a set temperature (about 40°C, for example).

The tissue piece forming device 200 is used in the following manner. At first, the tissue block Bk1 is fixed to the tissue block holder 21, and the tissue block-heating means 8 is used to blow warm air onto the tissue block Bk1. The tissue block Bk1 is appropriately heated to make the surface thereof to be sliced soft. Thereafter, the tissue block holder 21 and cutter blade 22 are moved relative to each other to slice the surface of the tissue block Bk1 with the cutter blade 22. Since the surface of the tissue block Bk1 is brought to a soft state, cracks are prevented from inducing in the slicing process. Since multiple cracks induce when the cut piece has a large thickness, it is very effective that the surface of the tissue block is in the soft state. In addition, since the sliced piece is in the soft state, it becomes flat due to the suppression of its feature of being rolled up to make the handling ready in the subsequent rolling-up process by the rotary shaft 1. The tissue piece S is in a state appropriate enough to roll up when rapid transfer to the rolling-up process is performed. As a result, the heating by the tissue piece-heating means 4 can be eliminated or reduced in time to enable the enhancement of the working efficiency.

Particularly, when the tissue block-heating means 8 utilizes warm air heating, the air-blowing direction is preferably a direction A2 against the cutter blade 22. Though the sliced portion has a feature of being gradually rolled up when the tissue block Bk1 has been sliced with the cutter blade 22, by blowing warm air in the direction A2, the sliced portion is heated and, at the same time, air pressure is give from a direction resisting against the rolling-up process, thereby enabling the rolling-up process (into a roll) with exactitude.

### Third embodiment

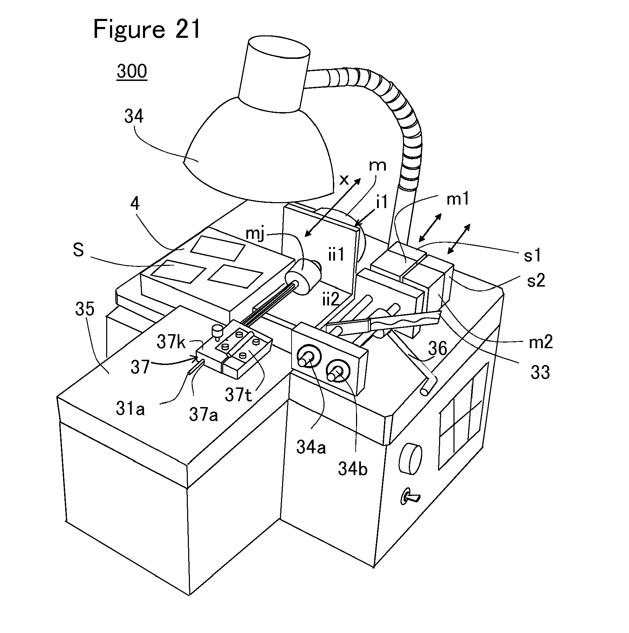

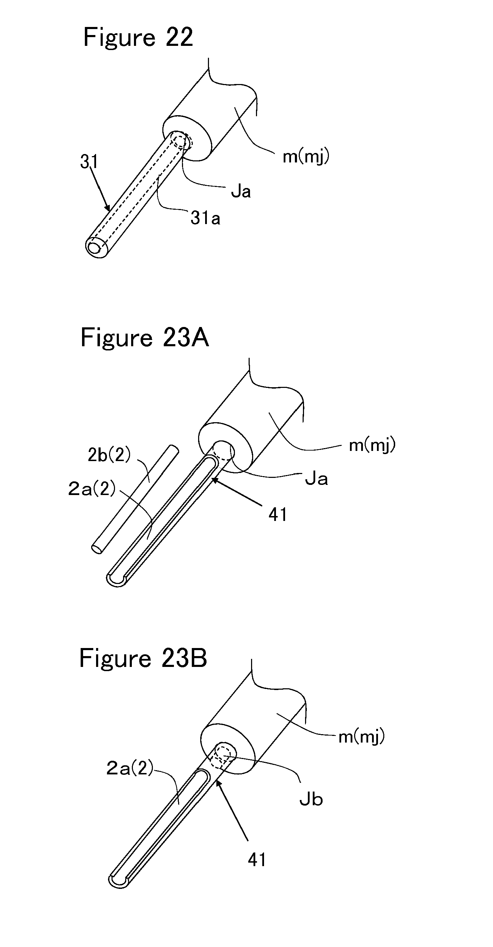

According to the invention, Figure 21 is a perspective view of a tissue piece forming device 300 according to the present embodiment. Figure 22 is a perspective view showing a rotary shaft 31 of the present embodiment. The rotary shaft 31 of the present embodiment has a hollow interior, is made of a synthetic resin (synthetic resin tube) and is attached to a drive motor *m* constituting rotary means. The hollow rotary shaft 31 is attached to the drive motor *m* so that a wire (slender support bar made of a metal) 31 a may be inserted into a shaft hole Ja formed in a drive shaft mj of the drive motor m. Though the rotary shaft 31 of the present embodiment is made of vinyl chloride, it may be made of other synthetic resin or rubber. What are advantageous in the case of using the synthetic resin including *Teflon* (registered trademark) and vinyl chloride or rubber are that a roll-shaped tissue piece S densely attached to the portion made of synthetic resin or rubber can be cut off in the course of the forming process and that forming into a roll shape by heating is easy to perform because the material is not deprived of heat unlike in the case where the rotary shaft 31 is made of a metal.

The tissue piece forming device 300 is provided with tissue piece-cooling means 35 and heating-by-light means 34 besides the tissue piece-heating means (heating baseboard) 4 of the first embodiment. In addition, a first support shaft 34a and a second support shaft 34b are disposed along the rotary shaft 31, and press means 36 and a cutter 33 constituting a cutting tool are disposed on the support shafts, respectively. The heating-by-light means 34 performs heating through irradiation of light from above to the rotary shaft 31.

Tissue piece-heating means (a heating baseboard) 4 in the present embodiment is used for disposing thereon a sliced tissue piece (a tissue piece S is like a sheet (a single thin sheet) at the stage of the slicing process) S and extending it into a plain shape. In addition, in order to adjust the shape of the tissue piece S to a roll shape using the disposed heating-by-light means 34, the heating-by-light means is used for maintaining the tissue piece S in a soft state. The heating temperature by the heating-by-light means 34 is preferred to be at a degree of softening paraffin resin without melting the same. It is 30 to 50°C, for example. Incidentally, the heating-by-light means may be used when the roll-shaped tissue piece sliced from the tissue block is extended once into a plain shape.

The tissue piece-cooling means 35 is disposed alongside the tissue piece-heating means (heating baseboard) 4 as a cooling baseboard 35. The cooling baseboard 35 has a cooling temperature of about 0°C, cools the roll-shaped tissue piece densely attached to the rotary shaft 31 and solidifies the same as it is. A support base 37 is attached to the upper portion of the cooling baseboard 35. The support base 37 is formed therein with a groove 37a for supporting the wire (slender support bar made of a metal) 31 a serving as a core of the rotary shaft 1 and adapted to fix an insert member 2b. That is to say, the groove 37a is formed in a one-way openable and closable block 37k with a hinge 37t. Incidentally, a similar structure not permitting movement of the rotary shaft 31 may be adopted. In the present embodiment, since a plate-like disposing member i1 is constituted by frame members ii1 and ii2 and can move backward and forward on a substrate *p* in the direction of *x* in the figure, when the plate-like disposing member i1 is moved, with a state of the densely formed roll-shaped tissue piece S maintained, the rotary shaft 31 is mounted on the cooling baseboard 35, thereby performing cooling and solidifying. Incidentally, the cooling baseboard 35 or support base 37 may be moved backward and forward in the direction of *x* in the figure. The roll-shaped tissue piece S densely attached to the tube (core member) may be cooled with the tissue piece-cooling means 35 until the shape is fixed. Otherwise, the tissue piece extracted from the tube (core member) may be cooled. Incidentally, a water tank may be used as the cooling baseboard 35.

Furthermore, the plate-like disposing member i1 is moved to the rotary shaft support base 37 on the cooling baseboard 35 at a position immediately below a position of cutting by the cutting tool 33 to perform cooling with the tissue piece-cooling means 35. Incidentally, a configuration in which the cutting tool 33 is swung down from above the tissue piece disposed on the rotary shaft support base 37 may be adopted. The cutting tool 33 may have plural blades (cutting tools are equidistantly disposed on a support shaft 5b) to divide the dense roll-shaped tissue piece S into plural pieces.

The cutting tool 33 is adapted to cut the roll-shaped tissue piece S in a direction intersecting with the rotary shaft 31 and has the second support shaft 34b attached rotatably to the front and rear support walls separately of the first support shaft 34a. Press means 36 of the present embodiment assumes an L-shape and is rotatably attached to the second support shaft 34b disposed along the first support shaft 34a to which the cutting tool 33 is rotatably attached. While the first and second support shafts 34a and 34b are rotated by means of drive motors m1 and m2, respectively, and are movable in the direction of arrows shown in Figure 21 by means of cylinders s1 and s2 disposed rearward of the drive motors m1 and m2, respectively. Incidentally, a configuration may be adopted, in which the press means 36 and cutting tool 33 are rotatably attached to the same support shaft (34a or 34b) to secure a space for attaching the cutting tool 33 and forming the tissue piece into a roll and, thereafter, the roll-shaped tissue piece is can instantly be divided. The cutting tool 33 divides the roll-shaped tissue piece densely attached to the peripheral portion made of synthetic resin or rubber via the metallic support bar 31 a of the rotary shaft 31 (with the support bar as a foundation). The blade of the cutting tool 33 is used to perform cutting through applying the rotary shaft 31 to one place and rotation the rotary shaft 31 with drive motor. In addition, since the plate-like disposing member i1 is movable, the tissue piece can be divided in a predetermined width in order from the distal end of the rotary shaft 31 with the single cutting tool.

### Fourth embodiment

Next, another tissue piece forming method using a rotary shaft 41 made of synthetic resin or rubber will be described. According to the invention, Figure 23A and 23B are a perspective view illustrating the tissue piece forming method. Here, the rotary shaft 41 made of the synthetic resin or rubber has a hollow interior (is like a tubular shape), and the tubular rotary shaft 41 is attached so that the hollow portion thereof may be covered with a drive shaft Jb of a motor. The drive shaft is used without insertion of the metallic support bar 31 b as in the third embodiment. That is to say, by the rotation, with the rotary shaft 41 fixed through the insertion of the rotary shaft 41 on the drive shaft Jb of the motor *m*, the tissue piece S is formed into a dense roll shape around the rotary shaft 41 made of synthetic resin or rubber. Here, adhesion may be attained through application of molten paraffin to the portion of contact between the rotary shaft 41 and the tissue piece S. Particularly until the tissue piece S is rotated at lease one time, molten paraffin may be used. However, when the rotary shaft is made of synthetic resin, since the rotary shaft and the tissue piece are attached to each other without use of the molten paraffin, a dense roll-shaped tissue piece can be formed. The heating-by light means 34 causes the rotary shaft and tissue piece to be softened to attain adhesiveness, the heat by the heating means 34 is easy to transmit to the tissue piece because no core (metallic support bar) 31a is used, and the diameter of the dense roll-shaped tissue piece S can be made small because there is no core. These are merits. In addition, in the present embodiment, the tissue piece S formed into a roll shape (spiral shape) in the presence of the tube (core) is divided. Since the dense roll-shaped tissue piece S is formed without use of paraffin, it can easily be detached from the tube (core member: rotary shaft 41 made of synthetic resin). Incidentally, since the rotary shaft 41 or fixing member 2 is made of vinyl chloride that is different from the material of the tissue piece, the detachment can easily be performed.

Here, also in the present embodiment as in the first embodiment, the fixing means 2 may be used (Figure 23A). The fixing means 2 comprises the groove portion 2a formed in the rotary shaft 41 and the insert member 2b inserted into the groove portion 2a and, in this case, the insert member 2b is preferably made of a material capable of being cut thinly, such as synthetic resin like vinyl chloride or rubber. This is because the tissue piece S is inserted into the block Bk2 in the process P2 (refer to Figure 1), with the insert member 2b inserted at the center of the tissue block S and, in the process P3 (refer to Figure 2), the block Bk2 can be sliced together with the insert member 2b. Furthermore, in the process P4 (refer to Figure 2), the insert member 2b is preferably made of a material not adhering to the prepared slide with an adhesive used when attaching the tissue array sheet to the prepared slide. As a result, since the insert member 2b at the center is detached when the tissue array sheet has been attached to the prepared slide in the process P4, it can easily be detached from the prepared slide. The insert member 2b is preferably made of synthetic resin including vinyl chloride, for example, from the standpoints of capability of being cut thinly and adhesiveness. While the insert member 2b has a circular cylindrical shape in the present embodiment, the shape is not limitative and a polygonal shape at cross-section may be adopted, for example. Here, the tissue sheet is easy to roll up in the presence of the groove portion 2a. This is because, since one end of the sliced tissue piece S can be stopped as being inserted into the groove portion 2a, the tissue piece is easy to rotate in that state. The presence of the insert member 2b constituting the core prevents the roll-shaped tissue piece S from getting crushed in the cutting process and from loosing its shaft after being cut, and the operation thereof becomes ready.

The present invention is not limited to the above embodiments. The present invention may be equipped with at least the rotary shaft to which one end of the sheet-like tissue piece is fixed and provided as occasion demands with the mounting board 3, press means 5, tissue piece-heating means 4 and tissue block-heating means 8. The sheet-like tissue piece may be rolled up while being grasped by hand or a heater separately prepared may be used to heat the tissue piece or tissue block. In addition, the rotation of the rotary shaft may be performed by the drive of the motor or manually.

Furthermore, each means may have any shape insofar as it fulfills its target function. A shaft polygonal shape at cross-section, for example, may be used as the rotary shaft 1 (31, 41). As the fixing means 2, a fastener, such as a clip, provided on the outer circumference of the rotary shaft, the rotary shaft 1 (31, 41) divided axially into two between which the tissue piece is pinched, or means provided with an axial insertion hole into which one end of the tissue piece is inserted may be used. Means for heating and cooling the rotary shaft 1 to fix one end of the tissue piece through dissolution and solidification may be used. The tissue piece-heating means 4 may be a type not embedded in the mounting board 3, but permitting the tissue piece to be heated from above or laterally. Infrared irradiation may be used as the tissue block-heating means. Though the tissue block-slicing device has been described, with a sliding system in which the tissue block holder slides exemplified, a rotating system or any other system may be adopted.

In addition, the tissue piece forming device may be equipped with the tissue block-slicing device as a part and, in this case, the tissue block-slicing device may be provided integrally with the tissue block-heating means. The tissue piece forming device may be used in combination with a tissue block-slicing device prepared separately and, in this case, the tissue block-heating means prepared separately is preferably disposed at an optional position.

Furthermore, the present embodiment has been described, with the paraffin-embedded tissue block exemplified. However, this is not limitative. A tissue block having the tissue frozen, for example, may be used. In this case, an embedding agent called a compound is used instead of paraffin. The compound having the tissue embedded therein is frozen, and each of the methods described above is carried out preferably in a cooling environment capable of maintaining the frozen state. In this case, the heating by the tissue piece-heating means or tissue block-heating means is not performed. Otherwise, the temperature or heating time is adjusted to bring the tissue piece to an appropriately soft state. The tissue is not limited insofar as it is a body tissue. Moreover, the present invention can appropriately be modified within the objects of the present invention.

## Claims

1. A tissue piece-forming device for forming a sheet-like tissue piece into a roll shape, comprising a rotary shaft capable of fixing one end of the sheet-like tissue piece thereto and drive means for rotating the rotary shaft, whereby the sheet-like tissue piece is formed into a roll shape while the rotary shaft is rotated.

2. A tissue piece-forming device according to claim 1, further comprising fixing means for fixing the one end of the sheet-like tissue piece to the rotary shaft, wherein the fixing means comprises a groove portion provided in an axial direction and an insert member capable of being inserted into and extracted from the groove portion.

3. A tissue piece-forming device according to claim 1, further comprising a mounting board disposed at a position in a vicinity of the rotary shaft for mounting the sheet-like tissue piece thereon, and the tissue piece-heating means for heating the tissue piece mounted on the mounting board.

4. A tissue piece-forming device according to claim 1, further comprising a mounting board disposed at a position in a vicinity of the rotary shaft for mounting the sheet-like tissue piece thereon, and tissue piece-cooling means for cooling the tissue piece mounted on the mounting board.

5. A tissue piece-forming device according to claim 1, further comprising press means for pressing toward the rotary shaft the tissue piece fixed to the rotary shaft.

6. A tissue piece-forming device according to claim 1, further comprising a cutting tool for cutting the tissue piece fixed to the rotary shaft in a direction intersecting with an axial direction of the rotary shaft.

7. A tissue piece-forming method for forming a sheet-like tissue piece into a roll shape, comprising forming the tissue piece into a roll shape while rotating a rotary shaft capable of fixing one end of the tissue piece thereto.

8. A tissue piece-forming method according to claim 7 wherein the rotary shaft is made of synthetic resin or rubber, has a hollow interior and has a metal support bar inserted into the hollow interior, and further comprising cutting a portion of the rotary shaft made of synthetic resin or rubber on an outer circumference of the metal support bar together with the tissue piece formed into the roll shape.

9. A tissue piece-forming method according to claim 7 wherein the tissue piece into a roll shape while rotating a rotary shaft made of synthetic resin or rubber and capable of fixing one end of the tissue piece thereto and cutting the tissue piece formed into the roll shape together with the synthetic resin or rubber rotary shaft.
